# EUROPÄISCHE PATENTANMELDUNG

(11) **EP 4 098 805 A1**
(43) Veröffentlichungstag der Anmeldung: **07.12.2022**
(21) Anmeldenummer: 22176343.6
(22) Anmeldetag: 31.05.2022
(51) Int. Cl.: E02F 9/08, E02F 9/16, B60H 1/00

(54) **MOBILE ARBEITSMASCHINE, INSBESONDERE RADLADER, MIT EINER HEIZEINHEIT IN DER FAHRERKABINE**

(30) Priorität: 04.06.2021 DE 102021114441
(71) Anmelder: Kramer-Werke GmbH, 88630 Pfullendorf (DE)
(72) Erfinder: BENNING, Simon, 73441 Bopfingen (DE); KELLER, Johannes, 88094 Oberteuringen (DE); SCHELE, Josef, 88410 Bad Wurzach (DE); VOGT, Claus, 78253 Eigeltingen (DE)
(74) Vertreter: Otten, Roth, Dobler & Partner mbB Patentanwälte

(57) **Zusammenfassung**

Es wird eine mobile Arbeitsmaschine (1), insbesondere Radlader (1), Teleskoplader, Bagger, Dumper, Traktor oder dergleichen, mit einem Fahrzeugrahmen und mit einer **elektrischen** Antriebseinheit zum Antreiben wenigstens eines Antriebslaufrades (17) oder einer Antriebskette, wobei eine zumindest einen Fahrersitz (7) und wenigstens ein Lenkelement/Lenkrad (6) aufweisende Fahrerkabine (15) für einen Fahrer vorgesehen ist, wobei wenigstens eine Heizanlage (20 bis 27) zum Beheizen der Fahrerkabine (15) vorgesehen ist, vorgeschlagen, die wenigstens teilweise die Nachteile des Standes der Technik verbessert. Dies wird erfindungsgemäß dadurch erreicht, dass die Heizanlage (20 bis 27) wenigstens eine Strahlungswärme-Heizeinheit (20 bis 24) zum Erzeugen einer Strahlungswärme (28, 29) umfasst.

## Beschreibung

Die Erfindung betrifft eine mobile Arbeitsmaschine, insbesondere Radlader, Teleskoplader, Bagger, Dumper, Traktor oder dergleichen, mit einem Fahrzeugrahmen und mit einer elektrischen Antriebseinheit zum Antreiben wenigstens eines Antriebslaufrades oder einer Antriebskette, nach dem Oberbegriff des Anspruchs 1.

### Stand der Technik

Mobile Arbeitsmaschinen, insbesondere Radlader, Teleskoplader, Bagger, Traktor oder dergleichen, mit einem Fahrzeugrahmen und mit einer Antriebseinheit zum Antreiben wenigstens eines Antriebselementes wie eines Laufrades oder Laufkette, werden heutzutage meist mit einem nachfüllbaren Kraftstoff betrieben. Dabei kommen heute hauptsächlich dieselgetriebene Fahrzeuge zum Einsatz. Zwischenzeitlich sind bereits auch elektrisch angetriebene Maschinen im Einsatz. So gibt es "reine" Elektroantriebe, die ausschließlich die Traktionsbatterie als einzige Energiequelle sowohl für den Antrieb bzw. die Fahr als auch für das Arbeitswerkzeug bzw. einen Hub-/Teleskoparm etc. aufweisen, oder es gibt bereits auch sog. "Hybridantriebe", die sowohl einen elektrischen Antriebmotor/Elektromotor als auch einen Verbrennungsmotor bzw. Dieselmotor für den Antrieb aufweisen.

Auch sind bereits hydrostatische Antriebssysteme im Einsatz, wobei ein Antriebsmotor, z.B. verbrennungsmotorisch oder elektrisch ausgeführt, ein hydraulisches Aggregat wie eine Hydraulikpumpe bzw. (indirekt) einen Hydraulikmotor oder dergleichen antreibt. Dieses hydraulische Aggregat treibt wiederum das Antriebselement wie das Antriebslaufrad bzw. die Antriebskette und ggf. auch weitere hydraulische Komponenten wie den/die Hubzylinder eines Hubarmes, Teleskopauslegers, Dreipunkt-Hebevorrichtung oder dergleichen an.

Außer bei z.B. Radladern mit großen Schaufeln am Hubarm weisen moderne, mobile Arbeitsmaschinen vielfach lösbar verbindbare Arbeitswerkzeuge auf, z.B. die mittels sog. "Schnellwechslern" bzw. "Wechselplatten" gehalten bzw. gelöst werden. Hierbei existieren neben "passiven" Arbeitswerkzeugen wie Schaufel, Ballen-Gabel oder dergleichen auch Arbeitswerkzeuge wie ein Kehrbesen, Mulcher, Greifarme, Greifschaufel, Hebegabeln oder dergleichen, die entsprechend ein "aktives" bzw. mit Energie antreibbares Werkzeug aufweisen.

Beim Betrieb von mobilen Arbeitsmaschinen, insbesondere Radlader, Teleskoplader, Bagger, Traktor oder dergleichen, mit hoher Leistungsanforderung durch einen elektrischen Energiespeicher werden höchste Anforderungen an die Verwendung bzw. den Verbrauch an gespeicherter, elektrischer Energie gestellt.

Darüber hinaus fällt bei einem elektrischen Betrieb/Antrieb der mobilen Arbeitsmaschine weniger Abwärme an, insb. vom Antriebsmotor. Zwar erwärmt sich v.a. der elektrische Energiespeicher im Betreib, wobei jedoch dies nicht mit der Abwärme eines Verbrennungsmotors vergleichbar und ggf. nutzbar ist. So ist es gerade auch aus Effizienzgründen notwendig, im Betrieb keine oder möglichst wenig von der gespeicherten elektrischen Energie in nicht-elektrische (Verlust-)Energie umzuwandeln bzw. durch die Erwärmung des elektrischen Energiespeichers den Wirkungsgrad zu verschlechtern oder durch eine hohe Betriebstemperatur diesen bleibend zu beschädigen. Es ist nämlich auch möglich, dass der Energiespeicher bei einem Überschreiten der Maximaltemperatur zerstört und damit unbrauchbar wird.

Allerdings weisen mobile Arbeitsmaschinen oftmals auch eine Fahrerkabine auf, die zumindest in der kalten Jahreszeit bzw. im Winter für den Fahrer beheizt werden sollen. Dies erfolgte bei Maschinen mit Dieselantrieb durch die Abwärme des Dieselmotors und bei elektrisch angetriebenen Arbeitsmaschinen mittels Widerstandsheizer, wobei jeweils elektrische Gebläse zur Erzeugung eines auf den Fahrer ausrichtbaren Warmluftstromes eingesetzt wurden.

Die bisherigen Heizsysteme verbrauchen jedoch vergleichsweise viel elektrische Energie, um ein für den Fahrer angenehmes Arbeitsklima in der Kabine zu erzeugen.

### Aufgabe und Vorteile der Erfindung

Aufgabe der Erfindung ist es demgegenüber, eine mobile Arbeitsmaschine vorzuschlagen, die wenigstens teilweise die Nachteile des Standes der Technik verbessert.

Diese Aufgabe wird, ausgehend von einer mobilen Arbeitsmaschine der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße mobile Arbeitsmaschine dadurch aus, dass die Heizanlage wenigstens eine Strahlungswärme-Heizeinheit zum Erzeugen einer Strahlungswärme umfasst.

Mit Hilfe einer derartigen Strahlungswärme-Heizeinheit kann nicht nur auf ein Gebläse, sondern auch auf ein Aufheizen des Kabineninnenraumes bzw. der Raumluft verzichtet werden. So wird gemäß der Erfindung die Heizenergie zur Erwärmung des Fahrers als Strahlungswärme der Strahlungswärme-Heizeinheit dem Fahrer zugeführt. Das bedeutet, dass mittels Strahlungswärme bzw. ausgesendeter Wärmestrahlung der Fahrer bzw. dessen Körper, Kleidung und/oder Haut durch Absorption der Wärmestrahlung erwärmt wird.

Demzufolge kann eine energieintensive Aufheizung der KabinenInnenraumluft entfallen bzw. die Kabinen-Innenraumtemperatur im Vergleich zur bisherigen Kabinenheizung deutlich niedriger sein. Ebenso kann ein Gebläse zur Erzeugung einer Warmluftströmung, die auf den Fahrer gerichtet ist, entfallen.

Im Sinn der Erfindung ist die Strahlungswärme-Heizeinheit in vorteilhafter Weise eine Strahlungsheizung oder Wärmewellenheizung, deren überwiegende Wärmeabgabe durch Infrarotstrahler in Form von Wärmestrahlung erfolgt.

Es hat sich in ersten Versuchen gezeigt, dass dies gerade bei mobilen Arbeitsmaschinen von großem Vorteil ist, da hier der Fahrer sich einerseits oftmals nur kurz in der Kabine sich aufhält bzw. fährt und anderseits der Fahrer sehr häufig die Kabine beispielsweise für einen Werkzeugwechsel oder für ein Anhängen/Abhängen eines Transportanhänger oder dergleichen die Kabine verlassen muss.

So lassen die Fahrer von mobilen Arbeitsmaschinen die Kabinentür oft im Betrieb offen, wodurch bislang auch die erwärmte Kabineninnenraumluft in die Umgebung bzw. Atmosphäre hinausströmt und zu einer Abkühlung der Kabinentemperatur führt. Dies kann gemäß der Erfindung durch eine vergleichsweise niedrige Innenraumtemperatur bzw. durch ein direktes Anstrahlen des Fahrers vermieden werden.

Dementsprechend kann gemäß der Erfindung der Fahrer sogar auch bei offener Kabinentür, wie dies zum Teil auch während dem Betrieb bzw. während der Arbeit über einen vergleichsweise langen Zeitraum von Fahrern realisiert wird, mittels der Strahlungswärme-Heizeinheit zum Erzeugen einer Strahlungswärme angenehm gewärmt bzw. angestrahlt werden, so dass dieser Fahrer auch in dieser Betriebs-/Arbeitsphase ein angenehmes Temperaturempfinden hat.

Vorzugsweise ist die Strahlungswärme-Heizeinheit als Wärmeflächenheizung ausgebildet. Das bedeutet, dass die Strahlungswärme-Heizeinheit nicht eine punktuelle bzw. kleindimensionierte Heizung ist, sondern eine vergleichsweise großflächige Heizung, deren Heizfläche zur Dicke besonders groß bzw. ein Vielfaches deren Dicke ist und/oder im Vergleich zu den Dimensionen der Kabine und/oder deren Komponenten wie Lenkrad, Fahrersitz, Armaturenbrett oder dergleichen entsprechend groß/großflächig ausgebildet ist. Hiermit kann vergleichsweise viel Strahlungswärme abgegeben werden.

Vorteilhafterweise ist ein Abstand zwischen Wärmeflächenheizung bzw. Strahlungswärme-Heizeinheit und Fahrer vorgesehen. So kann die Wärmeflächenheizung bzw. die Strahlungswärme-Heizeinheit an einer vorteilhaften Position angeordnet bzw. angebracht/befestigt werden, um beispielsweise in vorteilhafter Weise auf den Fahrer und/oder auf einzelne Körperteile des Fahrers ausgerichtet werden zu können.

In einer vorteilhaften Variante der Erfindung ist wenigstens ein Kabinendach der Fahrerkabine vorgesehen und zudem umfasst das Kabinendach wenigstens eine Kabinendach-Heizeinheit, die vorzugsweise als Strahlungswärme-Kabinendach-Heizeinheit und/oder als Wärmeflächen-Kabinendachheizung ausgebildet ist. Hiermit kann der Fahrer besonders gut angestrahlt bzw. im Sinn der Erfindung erwärmt werden. Zudem ist das Kabinendach bzw. dessen Innenfläche vergleichsweise groß/großflächig, so dass eine vorteilhafte Heizung bzw. Heizleistung verwirklicht werden kann.

Alternativ oder in Kombination zur zuvor genannten Kabinendach-Heizeinheit kann bei einer vorteilhaften Ausführungsform der Erfindung die Heizanlage wenigstens eine Bodenheizeinheit zum Beheizen eines Kabinenbodens und/oder einer Fußmatte umfassen, wobei bevorzugt die Bodenheizeinheit als Strahlungswärme-Bodenheizeinheit und/oder als Wärmeflächen-Bodenheizung ausgebildet ist. Hiermit kann ebenfalls eine vergleichsweise große/Großflächige Heizung verwirklicht werden. Zudem können die Füße bzw. Schuhe des Fahrers in vorteilhafter Weise beheizt bzw. erwärmt werden, so dass der Fahrer keine zu kalten Füße bekommt. Dementsprechend komfortabel ist die erfindungsgemäße Heizung für den Fahrer.

In einer besonderen Weiterbildung der Erfindung umfasst die Heizanlage wenigstens eine Sitzheizeinheit zum Beheizen des Fahrersitzes. Hierdurch kann der Fahrer direkt mittels des Sitzes, quasi "von unten" beheizt werden. Auch hiermit kann ein angenehmes Temperaturempfinden generiert werden, obwohl ggf. die Innenraumluft vergleichsweise kalt ist bzw. recht niedrig ist.

Vorzugsweise umfasst die Heizanlage wenigstens eine Scheibenheizeinheit zum Beheizen einer Kabinenscheibe. Diese ist beispielsweise als Widerstandsheizung ausgebildet und erwärmt die Kabinenscheibe. So kann eine Doppelfunktion realisiert werden, nämlich einerseits für eine gute Sicht durch die Kabinenscheibe bzw. zum Enteisen der Kabinenscheibe im Winter bzw. Minustemperaturen im Freien und andererseits zum Beheizen des Innenraums der Kabine.

Vorteilhafterweise umfasst die Heizanlage wenigstens ein Heizelement zum Beheizen des Lenkelements und/oder des Lenkrads und/oder einer Armlehne. Dies ermöglicht in vorteilhafter Weise ein Erwärmen bzw. Beheizen der vergleichsweise wärmeempfindlichen Hände/Finger des Fahrers, so dass die Innenraumtemperatur weiter gesenkt werden kann, ohne dass der Fahrer ein unangenehmes Temperaturempfinden hat bzw. ohne dass der Fahrer in der Kabine friert.

In einer vorteilhaften Ausführungsform der Erfindung umfasst die Heizanlage wenigstens eine PTC-Heizeinheit und/oder eine Wärmepumpe und/oder eine Brennstoffzelle. Hiermit kann der Fahrer in vorteilhafter Weise erwärmt werden bzw. ein angenehmes Wohlbehaglichkeitsgefühl generiert werden.

Gemäß einer bevorzugten Ausführungsform der Erfindung ist der elektrische Energiespeicher bzw. die Traktionsbatterie die einzige Energiequelle zum Antrieb der Arbeitsmaschine. Das bedeutet beispielsweise, dass zum Antrieb bzw. Betrieb der Arbeitsfunktionen, der Fahrfunktionen und der Versorgung aller Systeme, wie beispielsweise der Heizung, Licht, Blinker, Hube etc., ausschließlich eine elektrisch-chemische Energiequelle bzw. der elektrische Energiespeicher vorgesehen ist. Demzufolge ist bei dieser Variante kein Verbrennungsmotor, insb. Dieselmotor vorgesehen. Das heißt, dass die Arbeitsmaschine keinen Verbrennungsmotor und/oder keinen Dieselmotor umfasst und/oder dass die Arbeitsmaschine gemäß dieser Variante der Erfindung keinen sog. "Hybridantrieb" aufweist.

Vorzugsweise ist eine vorteilhafte (steuerbare) Zeitschaltuhr und/oder elektronischer Kontrolleinheit vorgesehen. Hiermit kann z.B. die Heizung/Heizanlage mittels der Zeitschaltuhr und/oder elektronischer Kontrolleinheit aktiviert werden, sowohl wenn die Arbeitsmaschine in Betrieb ist als auch wenn die Arbeitsmaschine nicht in Betrieb ist. Beispielsweise kann zur Vorheizung am Morgen und/oder nach einer längeren Arbeitspause bzw. vor Arbeitsbeginn die Heizung/Heizanlage gemäß der Erfindung aktiviert bzw. eingeschalten werden. Vorzugsweise erfolgt die Aktivierung bzw. das Einschalten der Arbeitsmaschine und/oder der Zeitschaltuhr und/oder der Heizung/Heizanlage gemäß der Erfindung per elektrischer und/oder elektronischer Kontrolleinheit und/oder drahtlos bzw. mittels Funk und/oder mit Hilfe der Zeitschaltuhr.

Vorzugsweise ist ein mobiles Telekommunikationsgerät wie ein Smartphone, Tablett, Notebook oder dergleichen vorgesehen, mit dem die Arbeitsmaschine und/oder die Zeitschaltuhr und/oder die Heizung/Heizanlage gemäß der Erfindung eingeschalten bzw. in Betrieb genommen werden kann. Beispielsweise kann ein Arbeiter/Fahrer die Arbeitsmaschine und/oder die Zeitschaltuhr und/oder die Heizung/Heizanlage gemäß der Erfindung mittels seines mobiles Telekommunikationsgerät wie ein Smartphones, Tabletts, Notebooks oder dergleichen einschalten, z.B. von Zuhause aus und/oder vor/während/beim Frühstücken oder dergleichen. Auch kann das mobile Telekommunikationsgerät wie Smartphone, Tablett, Notebook oder dergleichen eine oder mehrere eingegebene/einprogrammierte und/oder gespeicherte Zeiten bzw. Zeitpunkte aufweisen, zu der/denen bzw. zu diesen die Heizung/ Heizanlage gemäß der Erfindung de-/aktiviert bzw. ein-/ ausgeschalten wird.

In den vorgenannten, vorteilhaften Fällen ist z.B. die Fahrerkabine in vorteilhafter Weise bereits warm, bis der Arbeiter, Fahrer zum Arbeiten zur/mit der Arbeitsmaschine kommt bzw. mit dem Fahren/Arbeiten beginnt. So können ggf. weitere Funktionen und/oder Komponenten entspr. drahtlos bzw. mittels mobilem Telekommunikationsgerät wie Smartphone, Tablett, Notebook oder dergleichen de-/aktiviert bzw. umgesetzt werden.

Alternativ oder in Kombination zu der o.g. Zeitschaltuhr, Kontrolleinheit und/oder drahtlosen Aktivierung bzw. mittels Funk und/oder ein-/ausschalten bzw. kontrollieren mittels eines mobilen Telekommunikationsgerätes wie ein Smartphones, Tabletts, Notebooks oder dergleichen ist in vorteilhafter Weise ein Temperatursensor zur Erfassung einer Ist-/Temperatur bzw. einer Fahrerkabinentemperatur vorgesehen. So kann die Vorheizung auch mit dem Temperatursensor und der Zeitschaltuhr und/oder elektronischer Kontrolleinheit kombiniert werden. Beispielsweise kann die Vorheizung nur dann aktiviert werden, wenn eine gewisse Ist-/Temperatur unterschritten ist, z.B. unter dem Gefrierpunkt oder unter ca. 10° etc..

Die Vorheizung kann in vorteilhafter Weise auch durch ein Steuergerät und/oder elektronischer Kontrolleinheit in Abhängigkeit von der ist-/Temperatur aktiviert werden, um zu einem festgelegten/gewünschten Zeitpunkt eine voreingestellte Soll-/Temperatur, z.B. in der Fahrerkabine, zu erreichen. Die Heizung kann somit in Abhängigkeit von der ist-/Temperatur und/oder der Tageszeit und/oder den Arbeitsphasen gestartet und beendet bzw. betrieben werden. Zum Beispiel kann hiermit zu einem festgelegten Zeitpunkt eine Soll-/Zieltemperatur erreicht werden. Dementsprechend sollte bei tiefen Außen-/Temperaturen die erfindungsgemäße Heizung/Heizanlage im Vergleich zu höheren Außentemperaturen früher eingeschalten/gestartet werden, um möglichst länger laufen zu können, bis z.B. der Fahrer arbeiten/fahren möchte.

Die Vorheizung kann auch davon abhängig gemacht werden, ob die Arbeitsmaschine an einem Ladegerät eingesteckt ist, so dass keine Akkuladung dafür genutzt werden muss. Dementsprechend kann ein Betrieb der Heizung/Heizanlage in einem Ladezustand des elektrischen Energiespeichers der elektr. Antriebseinheit vorgesehen werden. So wird Netzenergie bzw. Netzspannung für das Heizen mit der Heizung/Heizanlage gemäß der Erfindung in vorteilhafter Weise verwendbar.

Die Betriebsweise bzw. das Heizen der Heizung/Heizanlage gemäß der Erfindung in einem Ladezustand des elektrischen Energiespeichers der elektr. Antriebseinheit bzw. in einem Ladezustand der Traktionsbatterie ist in vorteilhafter Weise mit einer/der drahtlosen Aktivierung bzw. mittels Funk und/oder mit dem Ein-/Ausschalten bzw. Kontrollieren zumindest der Heizung/Heizanlage mittels eines mobilen Telekommunikationsgerätes wie ein Smartphones, Tabletts, Notebooks oder dergleichen in vorteilhafter Weise kombinierbar. Dies verbessert zusätzlich den Komfort und eine Energie sparende Betriebsweise bzw. eine vorteilhafte Verwendung der im Energiespeicher gespeicherten bzw. (noch) nicht gespeicherten elektrischen Energie.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: eine schematische, perspektivische Ansicht einer mobilen Arbeitsmaschine mit Fahrerkabine gemäß der Erfindung sowie mit Anbaugerät,
- Figur 2: eine schematische, perspektivische Ansicht der Kabine gemäß Figur 1 und erfindungsgemäßer Heizung und
- Figur 3: eine schematische Seitenansicht der Kabine gemäß Figur 2.

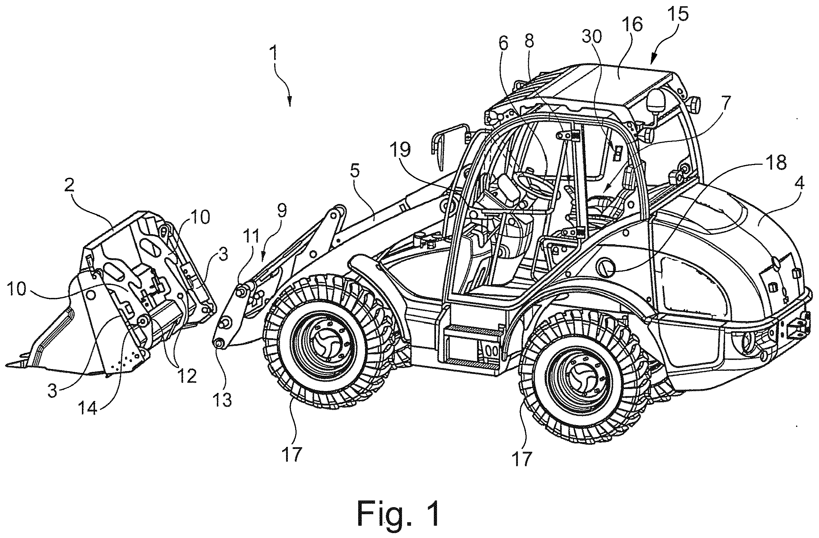

In Figur 1 ist ein Radlader 1 bzw. eine mobile Arbeitsmaschine 1 mit einem Anbaugerät bzw. einem Arbeitswerkzeug 2 gemäß der Erfindung schematisch dargestellt. Bei dem Arbeitswerkzeug 2 handelt es sich vorliegend um eine sog. "Greifschaufel" 2, d.h. dass diese Schaufel nicht nur "passiv" ist, sondern dass ein Teil der Greifschaufel 2 mittels zweier Hydraulikzylinder 3 aktiv verstellt werden kann, z.B. zum schnellen Entleeren von Baumaterial wie Kies oder Sand. Dementsprechend handelt es sich um ein "aktives Arbeitswerkzeug" 2, wobei in vorteilhafter Weise Energie, d.h. vorliegend hydraulische Energie mittels Hydrauliköl, von einem Antriebsfahrzeug 4 auf das Arbeitswerkzeug 2 zu übertragen ist.

Ohne nähere Darstellung weist das Antriebsfahrzeug 4 in vorteilhafter Weise einen Antriebsmotor, insbesondere ein Elektromotor, sowie ggf. eine optional vorzusehende, nicht näher dargestellte Hydraulikpumpe auf, um einerseits die elektrische Antriebsenergie für Antriebsräder 17, insbesondere für einen Allradantrieb, und andererseits die Hydraulikenergie z.B. für einen Hubarm 5, eine Lenkung 6 und das Arbeitswerkzeug 2 bzw. die Greifschaufel 2, d.h. die Hydraulikzylinder 3, zur Verfügung zu stellen und diese entsprechend betreiben zu können.

Für das Laden eines nicht näher dargestellten elektrischen Speichers/Akkus ist in vorteilhafter Weise ein Anschluss bzw. eine Ladebuchse 18 vorgesehen.

Der Radlader 1 bzw. die mobile Arbeitsmaschine 1 kann jedoch auch rein elektrisch betreiben werden, d.h. dass sowohl die Antriebsenergie mittels Elektromotor und elektrischem Speicher/Akku als auch die Hubenergie bzw. die Hebeenergie für den Hubarm 5 und ggf. für ein rein elektrisches Anbaugerät 2 als elektrische Energie in dem nicht näher dargestellten elektrischen Speicher/Akku gespeichert ist.

Ein (nicht abgebildeter) Fahrer steuert die Arbeitsmaschine 1 bzw. das Arbeitswerkzeug 2 von einem Fahrersitz 7 aus und hat hierfür neben der Lenkung 6 zudem ein Bedienelement 8 bzw. einen sog. "Steuerknüppel" 8, d.h. auch als sog. "Joystick" 8 bezeichnet/bekannt, zur Verfügung.

Zudem ist bei derartigen Radladern 1 oftmals in der Fahrerkabine 15 bzw. für den Fahrer neben dem Bedienelement 8 bzw. Joystick 8 ein weiterer, d.h. zweiter, vom Bedienelement 8 weit beabstandeter Schalter/Taster 30 vorhanden, um weitere Funktionalitäten zu verwirklichen.

Darüber hinaus besitzt der Radlader 1 eine Werkzeughaltevorrichtung 9 bzw. ein sog. "Schnellwechselsystem" bzw. eine sog. "Schnellwechselplatte", die z.B. vorliegend mit zwei Aufnahmen 10 des Arbeitswerkzeugs 2 in Wirkverbindung stehen können. So kann auf jeder Seite des Hubarmes 5, d.h. beidseits einer sog. Längsmittelebene des Antriebsfahrzeugs 4, eine obere Ausnehmung der Aufnahme 10 einen Bolzen 11 der Werkzeughaltvorrichtung 9 aufnehmen und eine untere Bohrung 12 der Aufnahme 10 kann einen Riegel 13 der Werkzeughaltvorrichtung 9 bzw. einen Kolben 13 eines Hydraulikzylinders 14 aufnehmen. Vertikale sowie horizontale Abstände sowie Durchmesser/Dimensionen der Aufnahmen 10, Riegel 13, Bohrungen 12 etc. sind in vorteilhafter Weise standardisiert, so dass unterschiedlichste Arbeitswerkzeuge 2 wie Schaufel, Hubgabeln, Greifer, Kehrbesen, Schneepfluge etc. schnell und ohne großen Aufwand am Hubarm 5 an- und abgekoppelt, d.h. ausgewechselt, werden können.

Vielfach muss der Fahrer für die üblichen "Schnellwechselsysteme" bei "aktiven" Arbeitswerkzeugen 2 wie die abgebildete Greifschaufel 2 zum Anschließen oder Lösen von Koppelelementen wie z.B. Hydraulikkupplungen/-schläuchen oder elektrischen Anschlüssen bei elektrischen Anbaugeräten 2 und/oder zum Beseitigen von Verschmutzungen von verschmutzten Kopplungskomponenten, insb. der elektrischen Kontaktelemente oder der Hydraulikkupplungen, die Fahrerkabine 15 bzw. den Fahrersitz 7 verlassen, was recht viel Zeit benötigt und wobei der Fahrer oftmals eine Kabinentür 19 der Kabine 15 offen lässt, um schneller zu sein bzw. es bequemer zu haben, d.h. um beim Ab- und Aufsteigen nicht immer die Tür 19 auf und wieder zu schließen zu müssen.

Oftmals lassen die Fahrer auch die Tür 19 während der Arbeit offen, wenn sie wissen, dass sie sehr bald wieder die Kabine 15 verlassen bzw. absteigen müssen. Hierbei steht dann die Tür 19 längere Zeit offen, was in der kalten Jahreszeit zu einem Auskühlen des Innenraumes führt.

Bei mit Dieselmotoren betriebene Radlader 1 gemäß dem Stand der Technik weist die Kabine 15 eine einzige Gebläseheizung auf, die die Abwärme des Dieselmotors in die Kabine 15 bläst und hierbei die Innenraumluft mittels Konvektion erwärmt.

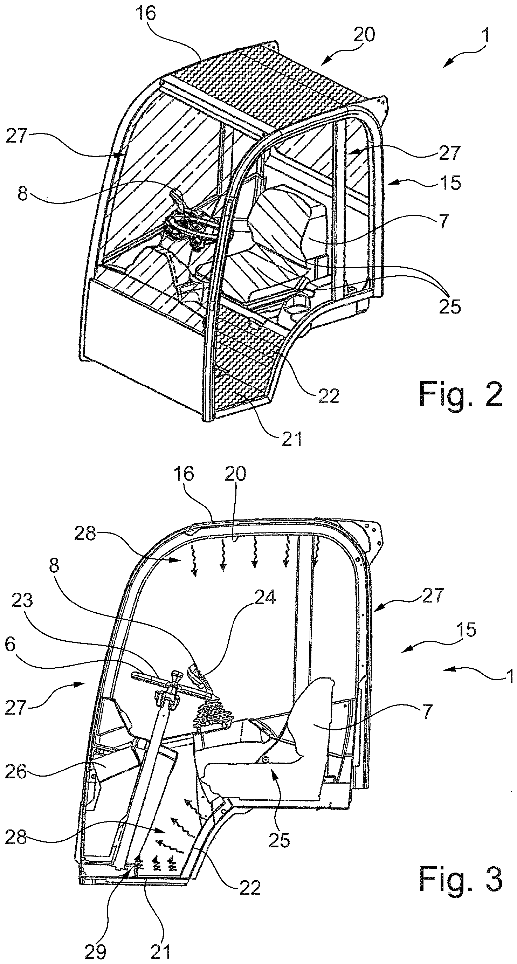

In Figur 2 bzw. 3 wird dagegen ersichtlich, dass beim abgebildeten Ausführungsbeispiel diverse, unterschiedliche Heizungen 20 bis 27 vorhanden sind. So können diese Heizungen 20 bis 27 in unterschiedlichster Weise und Kombination, d.h. einzeln oder gemeinsam bzw. alle, in Betrieb sein und für den Fahrer ein angenehmes Wohlfühlklima bzw. Wohlbefinden generieren.

Gemäß der Erfindung kann grundsätzlich und insb. beim abgebildeten Ausführungsbeispiel ein vorteilhaftes Wärme-Management verwirklicht werden. Dieses ermöglicht in vorteilhafter Weise mittels einer elektrischen/elektronischen Kontrolleinheit bzw. Steuerung und vorzugsweise mittels vorteilhafter, nicht näher dargestellter Temperatur-/Sensoren und/oder Schalter oder dergleichen eine bedarfsweise und/oder individuelle, bedürfnisorientierte und/oder automatisierte und/oder manuell betriebene Erwärmung bzw. Wärmeversorgung des Fahrer. Somit kann eine sehr Energie effizientes, fein abstimmbares Wohlbefinden für den Fahrer umgesetzt werden, was zu einem sparsamen Einsatz/Verbrauch der elektrischen Energie des elektrischen Speichers/Akkus führt.

So ist vorzugsweise eine Dachheizung 20 als Flächenheizung 20 bzw. Strahlungsheizung 20 ausgebildet, die Wärmestrahlung 28 aussendet und somit dem Fahrer Wärmestrahlung 28 zuleitet. Auch eine vorteilhafte Boden- bzw. Fußmattenheizung 21 ist als Flächenheizung 21 bzw. Strahlungsheizung 21 ausgebildet, die Wärmestrahlung 29 aussendet und somit dem Fahrer bzw. v.a. seinen Füßen Wärmestrahlung 28 zuleitet. Zudem ist eine vorteilhafte Wandheizung 22 als Flächenheizung 22 bzw. Strahlungsheizung 22 ausgebildet, die Wärmestrahlung 28 aussendet und hierbei dem Fahrer bzw. v.a. seinen Beinen Wärmestrahlung 28 zuleitet.

Darüber hinaus weist die Lenkung 6 bzw. das Lenkrad 6 eine Lenkradheizung 23 auf, die vorzugsweise als Flächenheizung 23 bzw. Strahlungsheizung 23 und/oder als Widerstandsheizung 23 ausgebildet, die somit den Fahrer bzw. v.a. dessen Hände/Finger erwärmen.

Weiterhin umfasst das Bedienelement 8 bzw. der sog. "Steuerknüppel" 8, d.h. der sog. "Joystick" 8, eine Joystick-Heizung 24, die vorzugsweise als Flächenheizung 24 und/oder Strahlungsheizung 24 und/oder als Widerstandsheizung 24 ausgebildet ist und die v.a. die Hände/Finger des Fahrers erwärmt.

Zusätzlich ist in vorteilhafter Weise eine Sitz-Heizung 25 vorgesehen, die vorzugsweise als Flächenheizung 25 und/oder als Widerstandsheizung 25 ausgebildet ist und die v.a. den Fahrer bzw. dessen Rücken und Gesäß erwärmt.

Darüber hinaus sind zwei Scheibenheizungen 27 vorgesehen, die vorzugsweise als Flächenheizung 27 und/oder Strahlungsheizung 27 und/oder als Widerstandsheizung 27 ausgebildet ist, die somit eine Frontscheibe und eine hintere Scheibe der Kabine 15 erwärmen und ggf. den Fahrer mittels Strahlungswärme erwärmen.

Beispielweise gerade für besonders kalte Außentemperaturen kann eine optional vorzusehende Heizung 26 in der Kabine 15 eingebaut sein, z.B. eine PCT-Heizung 26 insb. mit nicht näher dargestelltem Gebläse, so dass per Konvektion der Fahrer erwärmt werden kann.

Generell ist bei der Wärmeversorgung gemäß der Erfindung von großem Vorteil, dass der Fahrer v.a. mittels Strahlungswärme 28 erwärmt wird, so dass nicht die Innenraumluft, sondern der Fahrer im Wesentlichen direkt erwärmt wird und er ein angenehmes Wohlbefinden verspürt, obwohl die Innenraumtemperatur z.B. deutlich niedriger ist als bei Kabinenheizungen gemäß dem Stand der Technik. Dies führt zu einer erheblichen Energieeinsparung im Vergleich zum Stand der Technik.

Beispielsweise kann gemäß der Erfindung in vorteilhafter Weise eine elektrisch betriebene Strahlungsheizung 20 bis 27 genutzt werden, die entweder auf den Bediener/Fahrer oder zu beheizende Interieur-Oberflächen gerichtet ist, z.B. Armlehne, Joystick 8, Lenkrad 6. Die elektrische Energie stammt vorzugsweise aus dem Bordnetz der Maschine 1. Es kann sich dabei um eine konventionell, .d.h. mit Brennstoff bzw. Kraftstoff, mit Wasserstoff oder bevorzugt auch um eine akkubetriebene elektrisch angetriebene Maschine 1 handeln.

Die elektrische Strahlungsheizung 20 bis 27 ist in vorteilhafter Weise möglichst derart angebracht, dass die Strahlung 28 in Richtung des Bedieners/Fahrers abgegeben wird. Mögliche Anbringungsorte sind deshalb wie oben bereits skizziert, z.B. der Dachbereich 16, der Fußbereich 21 und 22, insbesondere an der Sitzkonsole zur Erwärmung der Waden, die A-, B-, C-Säulen der Kabine (sofern vorhanden), Bereiche neben oder auf einem Armaturenbrett und sonstigen Verkleidungsteilen, z.B. auch hinter dem Lenkrad 6 zur Erwärmung der Hände, etc.

Die Strahlungsheizungen 20 bis 22 können durch unterschiedlichste Heizungsvarianten/-systeme 25 bis 27 ergänzt werden, z.B. durch PTC-Heizungen. Eine Kombination mit anderen Heizlösungen ist sogar sinnvoll, um dem Fahrer die bestmögliche Behaglichkeit zu bieten. Vor allem durch die Kombination mit weiteren lokal wirkenden Heizlösungen, wie Sitzheizung, beheiztem Interieur oder Scheibenheizungen zum Defrosten, können dabei weitere Verbesserungen der Energieeffizienz erzielt werden.

Durch die Nutzung der Strahlungsheizung 28 kann das Temperaturniveau in der Kabine 15 abgesenkt werden, was eine höhere Energieeffizienz des Gesamtsystems mit sich bringt. Der konvektive Wärmeübertrag von der Raumluft über die Außenhülle an die Umgebung wird dadurch gemindert.

Bei akkubetriebenen Maschinen 1, besteht z.B. die vorteilhafte Möglichkeit den Einsatz der Heizung vom Ladezustand des Akkus abhängig zu machen. Beispielsweise kann die Nutzung einer PTC-Heizung 26 deaktiviert werden, wenn der Ladezustand unter einem bestimmten Grenz-Wert liegt. Die Nutzung der Strahlungsheizung 20 bis 22 kann z.B. noch ermöglicht werden. Die Strahlungsheizung 20 bis 22 kann dann ebenfalls deaktiviert werden, wenn der Ladezustand noch weiter abfällt, d.h. unter einen zweiten Grenz-Wert.

Die Strahlungsheizung 20 bis 22 wird mit elektrischem Strom betrieben. Die Betriebsspannung der Heizung entspricht bevorzugt der Betriebsspannung des Bordnetzes des Fahrzeugs 1. Die Betriebsspannung der Heizung kann aber auch von der Betriebsspannung des Bordnetzes abweichen, insbesondere bei akkubetriebenen Maschinen 1. Es könnte beispielsweise die höhere Spannung der Traktionsbatterie genutzt werden. Alternativ kann die elektrische Strahlungsheizung 20 bis 22 auch mit einer Spannung betrieben werden, die zwischen einer Spannung des Bordnetzes und einer Spannung der Batterie liegt.

Beim hier skizzierten Heiz-System handelt es sich in vorteilhafter Weise um ein Zusammenspiel verschiedenster Möglichkeiten/Systeme zum Beheizen der Fahrerkabine 15. Für einige Heizkomponenten, z.B. Wärmeflächenheizungen, PTC-Heizgerät etc., existieren verschiedene technische Lösungen:
- Flächenheizelemente können z.B. durch Heizelemente mit Latentwärmespeicher ersetzt werden,
- PTC-Heizgeräte können z.B. durch Brennstoffzellen oder Wärmepumpen ersetzt werden,
- es können verschiedene technische Möglichkeiten zum Umsetzen einer Scheibenheizung 27 eingesetzt werden,
- es können auch Heizungen mitgeführt werden, die auf einen eigenen Energieträger zurückgreifen, z.B. Ethanol oder Wasserstoff, und die somit unabhängig vom Hauptenergiespeicher des Fahrzeugs sind.

Das Funktionsprinzip der einzelnen Heizkomponenten tritt in vorteilhafter Weise bei dem oben beschriebenen Gesamtsystem in den Hintergrund. Vorzugsweise werden diverse beheizbare Interieur-Elemente verwendet, die Wärmeenergie in erster Linie in Form von Strahlung 28 in die Kabine emittieren. So ist es auch möglich, weitere, nicht in den Figuren aufgeführten Interieur-Elemente mit Flächenheizungen zu versehen, wie z.B. eine Armauflage oder weitere Wandheizungen etc..

Wesentliche Vorteile der Erfindung sind z.B.:
- Bei gleichbleibender oder sogar gesteigerter Behaglichkeit kann der Energiebedarf des Heizsystems gesenkt werden, was u.a. zu einer besseren Energieeffizienz führt,
- gesteigertes Behaglichkeitsgefühl für den Fahrer in nahezu allen Betriebssituationen,
- schnellere Wahrnehmbarkeit der Wärme durch den Fahrer,
- auch bei offener Tür 19 erwärmt die Strahlungswärme 28 den Fahrer,
- höhere Reichweite des Fahrzeugs 1 im Vergleich zu bisherigen Heizsystemen durch gesteigerte Energieeffizienz,
- je nach Position der Wärmeflächenheizung wird dem Fahrer mittels gezieltem Strahlungseintrag oder direkten Kontakt zu einem Flächenheizelement bereits kurz nach Fahrzeugstart Wärmeenergie zugeführt,
- außerdem können durch den Strahlungseintrag weitere Oberflächen zu einem gewissen Grad angewärmt werden, mit denen der Fahrer in Kontakt kommt und die selbst nicht aktiv beheizt sind, d.h. je nach Fahrzeugausstattung z.B. Joystick 8, Lenkrad 6, Armlehnen oder dergleichen,
- durch die Strahlungsheizung können vor allem Bereiche des Körpers erreicht werden, die durch beheizbare Kontaktflächen wie z.B. Sitz- 25 oder Lenkradheizung 23 nicht zu erreichen sind, d.h. u.a. Kopf- und Schulterbereich, Arme, Oberschenkel, und
- durch das erfindungsgemäße Heizsystem kann die Lufttemperatur in der Kabine 15 sehr stark abgesenkt werden.

### Bezugszeichenliste

- 1: Radlader
- 2: Greifschaufel
- 3: Hydraulikzylinder
- 4: Antriebsfahrzeug
- 5: Hubarm
- 6: Lenkung
- 7: Fahrersitz
- 8: Bedienelement
- 9: Werkzeughaltvorrichtung
- 10: Aufnahme
- 11: Bolzen
- 12: Bohrung
- 13: Riegel/Kolben
- 14: Übertragungsvorrichtung
- 15: Kabine
- 16: Dach
- 17: Rad
- 18: Ladebuchse
- 19: Tür
- 20: Dachheizung
- 21: Bodenheizung
- 22: Wandheizung
- 23: Lenkradheizung
- 24: Joystick-Heizung
- 25: Sitzheizung
- 26: Heizung
- 27: Scheibenheizung
- 28: Strahlung
- 29: Strahlung
- 30: Sensor

## Patentansprüche

1. Mobile Arbeitsmaschine (1), insbesondere Radlader (1), Teleskoplader, Bagger, Dumper, Traktor oder dergleichen, mit einem Fahrzeugrahmen und mit einer elektrischen Antriebseinheit zum Antreiben wenigstens eines Antriebslaufrades (17) oder einer Antriebskette, wobei die elektrische Antriebseinheit zumindest einen Elektromotor und wenigstens einen elektrischen Energiespeicher zum Speichern elektrischer Energie für den Elektromotor umfasst, wobei wenigstens eine Kontrolleinheit zur elektrischen und/oder elektronischen Kontrolle des Elektromotors und/oder des Energiespeichers vorgesehen ist, wobei wenigstens eine Werkzeughaltevorrichtung (5, 9) zum Halten eines lösbar verbindbaren Arbeitswerkzeugs (2) vorgesehen ist und/oder die Antriebseinheit wenigstens einen vom Elektromotor angetriebenen hydrostatischen Antriebsmotor zum Antreiben des Antriebslaufrades (17) oder der Antriebskette und/oder der Werkzeughaltevorrichtung (5, 9) umfasst, wobei insbesondere die Werkzeughaltevorrichtung (5, 9) wenigstens eine um eine Schwenkachse verschwenkbare Tragvorrichtung (5), z.B. Hubarm (5) und/oder Teleskopausleger und/oder Dreipunkt-Hebevorrichtung, umfasst, wobei eine zumindest einen Fahrersitz (7) und wenigstens ein Lenkelement/Lenkrad (6) aufweisende Fahrerkabine (15) für einen Fahrer vorgesehen ist, wobei wenigstens eine Heizanlage (20 bis 27) zum Beheizen der Fahrerkabine (15) vorgesehen ist, **dadurch gekennzeichnet, dass** die Heizanlage (20 bis 27) wenigstens eine Strahlungswärme-Heizeinheit (20 bis 24) zum Erzeugen einer Strahlungswärme (28, 29) umfasst.

2. Arbeitsmaschine nach Anspruch 1, **dadurch gekennzeichnet, dass** die Strahlungswärme-Heizeinheit (20 bis 24) als Wärmeflächenheizung (20 bis 24) ausgebildet ist.

3. Arbeitsmaschine nach einem der vorgenannten Ansprüche, **dadurch gekennzeichnet, dass** ein Abstand zwischen Wärmeflächenheizung (20 bis 24) und Fahrer vorgesehen ist.

4. Arbeitsmaschine nach einem der vorgenannten Ansprüche, **dadurch gekennzeichnet, dass** wenigstens ein Kabinendach (16) der Fahrerkabine (15) vorgesehen ist und dass das Kabinendach (16) wenigstens eine Kabinendach-Heizeinheit (20) umfasst

5. Arbeitsmaschine nach einem der vorgenannten Ansprüche, **dadurch gekennzeichnet, dass** die Kabinendach-Heizeinheit (20) als Strahlungswärme-Kabinendach-Heizeinheit (20) und/oder als Wärmeflächen-Kabinendachheizung (20) ausgebildet ist.

6. Arbeitsmaschine nach einem der vorgenannten Ansprüche, **dadurch gekennzeichnet, dass** die Heizanlage (20 bis 27) wenigstens eine Bodenheizeinheit (21) zum Beheizen eines Kabinenbodens und/oder einer Fußmatte umfasst

7. Arbeitsmaschine nach einem der vorgenannten Ansprüche, **dadurch gekennzeichnet, dass** die Bodenheizeinheit (21) als Strahlungswärme-Bodenheizeinheit (21) und/oder als Wärmeflächen-Bodenheizung (21) ausgebildet ist.

8. Arbeitsmaschine nach einem der vorgenannten Ansprüche, **dadurch gekennzeichnet, dass** die Heizanlage (20 bis 27) wenigstens eine Sitzheizeinheit (25) zum Beheizen des Fahrersitzes (7) umfasst.

9. Arbeitsmaschine nach einem der vorgenannten Ansprüche, **dadurch gekennzeichnet, dass** die Heizanlage (20 bis 27) wenigstens eine Scheibenheizeinheit (27) zum Beheizen einer Kabinenscheibe umfasst.

10. Arbeitsmaschine nach einem der vorgenannten Ansprüche, **dadurch gekennzeichnet, dass** die Heizanlage (20 bis 27) wenigstens ein Heizelement (23) zum Beheizen des Lenkelements (6) und/oder des Lenkrads (6) und/oder einer Armlehne umfasst.

11. Arbeitsmaschine nach einem der vorgenannten Ansprüche, **dadurch gekennzeichnet, dass** das Heizelement (23) als Strahlungswärme-Heizelement (23) und/oder als Wärmeflächenheizelement (23) ausgebildet ist

12. Arbeitsmaschine nach einem der vorgenannten Ansprüche, **dadurch gekennzeichnet, dass** die Heizanlage (20 bis 27) wenigstens eine PTC-Heizeinheit (26) umfasst.

13. Arbeitsmaschine nach einem der vorgenannten Ansprüche, **dadurch gekennzeichnet, dass** wenigstens eine Zeitschaltuhr vorgesehen ist, so dass die Heizanlage mittels der Zeitschaltuhr de-/aktiviert und/oder betrieben werden kann.

14. Arbeitsmaschine nach einem der vorgenannten Ansprüche, **dadurch gekennzeichnet, dass** wenigstens eine elektronische und/oder drahtlose Kontrolleinheit vorgesehen ist, so dass die Heizanlage mittels der elektronischen Kontrolleinheit drahtgebunden und/oder drahtlos und/oder per Funk de-/aktiviert und/oder betrieben werden kann.

15. Arbeitsmaschine nach einem der vorgenannten Ansprüche, **dadurch gekennzeichnet, dass** die Zeitschaltuhr und/oder elektronische und/oder drahtlose Kontrolleinheit als mobiles Telekommunikationsgerät ausgebildet ist.
